# EUROPÄISCHE PATENTANMELDUNG

(11) **EP 2 447 608 A2**
(43) Veröffentlichungstag der Anmeldung: **02.05.2012**
(21) Anmeldenummer: 11186665.3
(22) Anmeldetag: 26.10.2011
(51) Int. Cl.: F23L 15/04, F23D 11/36, F23D 11/44

(54) **Luftwärmetauscher**

(30) Priorität: 29.10.2010 DE 102010050058
(71) Anmelder: Robert Bosch GmbH, 70442 Stuttgart (DE)
(72) Erfinder: Rausch, Rainer, 36304 Alsfeld (DE); Mosser, Angelique, 35457 Lollar (DE); Ferreira Goncalves, Paulo Jorge, 60320 Frankfurt Am Main (DE)

(57) **Zusammenfassung**

Die Erfindung betrifft einen Luftwärmetauscher, insbesondere zur Vorwärmung von Verbrennungsluft bei einem Ölvormischbrenner durch Wärmeübertragung im Bereich einer Brenneroberfläche (2) von einem Brennelement (1), umfassend ein außen mit Wärme beaufschlagtes und innen mit Luft aus einem stromaufwärtigen, mit einem Gebläse verbundenen Verbrennungsluftkanal (5) durchströmtes Wärmetauscherrohr. Aufgabe der Erfindung ist es, einen Luftwärmetauscher für einen Ölvormischbrenner zu optimieren.

Erfindungsgemäß wird dies gelöst durch mindestens ein Doppelrohrelement (6) mit einem in Reihe durchströmten Innenrohr (7) und einem zu diesem konzentrischen Außenrohr (8), wobei das Innenrohr (7) mit mehreren Durchbrechungen (12) in seinem Mantel für eine Direktströmung in den umgebenden Ringraum (11) versehen ist.

## Beschreibung

Die Erfindung betrifft einen Luftwärmetauscher nach dem Oberbegriff des Patentanspruches 1.

Gattungsgemäße Luftwärmetauscher kommen bei Ölvormischbrennern zum Einsatz. Diese bestehen im Wesentlichen aus einem zylindrischen Brennelement mit einer Brenneroberfläche auf der äußeren Mantelfläche. Um eine zentrale Öleinspritzvorrichtung befindet sich in der Regel eine Verteilkammer für den entstehenden Ölnebel, damit dieser gleichmäßig von innen her die Brenneroberfläche erreicht. In die Verteilkammer gelangt Verbrennungsluft über mindestens eine Einströmöffnung im Bereich der Öleinspritzvorrichtung, wobei es sich um ein Einspritzventil oder eine Öldüse, welche an einem Düsenstock mit Ölvorwärmer befestigt ist, handeln kann. Stromaufwärts der Öleinspritzvorrichtung befindet sich ein Verbrennungsluftkanal mit Verbindung zu einem Gebläse.

Insbesondere bei Gasbrennern, die modulierend betrieben werden, also bei denen der Leistungsbereich zwischen einem geringen Anteil der Maximalleistung und der Maximalleistung gesteuert werden kann, haben sich die sogenannten Vormischbrenner durchgesetzt. Bei diesen Brennern wird der Brennstoff und die zu dessen Verbrennung erforderliche Verbrennungsluft von der Flamme örtlich getrennt vermischt und dann verbrannt. Dazu wird meist ein zylindrisches Brennelement als Flammenhalter eingesetzt, der für das Brennstoff-/Luft-Gemisch durchlässig ist und einen Innenraum umschließt, dem das Brennstoff-/Luft-Gemisch zugeführt wird. Mit dieser Technologie lassen sich kleine Flammen mit guten Abgaswerten, relativ kleine Flammenhalter und große Modulationsbereiche verwirklichen.

Das Grundprinzip eines Ölvormischbrenners ist die Vermischung von fein zerstäubtem Öl mit vorgewärmter Luft. Durch dieses Prinzip ist es möglich, dass sich zum Beispiel eine sogenannte kalte Flamme bildet, so dass der Brennstoff über eine Oberfläche verbrannt werden kann. Die Oberflächenverbrennung ist allerdings auch ohne kalte Flamme möglich. Generell ist das Erwärmen von Luft auf Grund der geringen Wärmekapazität relativ schwierig, weil dazu entweder ein effektiver Wärmeübergang über eine Wand auf den Luftstrom und/oder hohe Wandtemperaturen notwendig sind.

Ein Ölvormischbrenner ist zum Beispiel aus der DE 10 2006 000 174 A1 bekannt. Dabei wird die Tatsache genutzt, dass heiße Luft das Öl verdampft und somit ein Gasgemisch gebildet werden kann, welches wie bei einem Gas-Vormischbrenner durch den Flammhalter hindurch tritt und abbrennt. Durch die Zumischung von Abgas zur Verbrennungsluft zur Luftvorwärmung wird zudem die Bildung von Stickoxiden verringert und dadurch soll sich auch das Anlaufverhalten verbessern, weil der Betriebspunkt relativ schnell erreicht wird. Die Verbrennungsluft wird zur Wärmeaufnahme durch eine mindestens abschnittsweise über eine Brenneroberfläche ragende, von der Brennerflamme beabstandete Leiteinrichtung geführt und in einer Düse in der Leiteinrichtung beschleunigt, damit das Abgas aus dem Brennraum angesaugt und mit der Luft vermischt werden kann.

Auch die DE 26 43 293 A1 beschreibt einen solchen Kanal für die Verbrennungsluft, der als Zylinder um den hinteren Bereich eines Brennstabes bzw. Brennelementes angeordnet ist. Da für die Vermischung und die Verbrennungsreaktion ein bestimmter Mindestbrennelementdurchmesser erforderlich ist, kann dieser Aufbau allerdings zu einem gegenüber bekannten Bauformen insgesamt relativ großen Feuerraum führen.

Weiterhin sind aus der DE 21 07 514 A eine Vorrichtung zum Heizen mit Infrarotstrahlung und aus der US 1 082 576 A ein Ölbrenner mit flächig unterhalb der Brenneroberfläche angeordneten, abgeschlossenen, flächig durchgehenden Kanälen zur Luftvorwärmung bekannt. Aus diesen nicht unterbrochenen Kanälen wird in beiden Fällen die vorgewärmte Luft zum Zentrum mit der Brennstoffzufuhr zurück geleitet und dort mit Brennstoff vermischt. Von diesem Zentrum aus tritt das Gemisch in die Brennzone ein, ohne wieder in die Nähe des zur Vorwärmung dienenden Luft-Strömungsweges zu kommen.

Aus dem Bereich der Gasturbinen ist außerdem der Effekt der Filmkühlung. Zum Beispiel bezieht sich die DE 195 02 998 B4 auf eine Turbinenflügel-Filmkühlvorrichtung und zeigt Bohrungen in einem Flügel einer Turbinenschaufel, durch die Luft als Kühlmedium ausströmen kann. Damit wird die Grenzschicht gekühlt und der Werkstoff der Turbinenschaufel vor Hutzeeinflüssen geschützt.

Der Erfindung liegt daher die Aufgabe zugrunde, einen Luftwärmetauscher für einen Ölvormischbrenner zu optimieren.

Erfindungsgemäß wurde dies mit den Merkmalen des Patentanspruches 1 gelöst. Vorteilhafte Weiterbildungen sind den Unteransprüchen zu entnehmen.

Der Luftwärmetauscher dient insbesondere zur Vorwärmung von Verbrennungsluft bei einem Ölvormischbrenner durch Wärmeübertragung im Bereich einer Brenneroberfläche von einem Brennelement. Er umfasst ein außen mit Wärme beaufschlagtes und innen mit Luft aus einem stromaufwärtigen, mit einem Gebläse verbundenen Verbrennungsluftkanal durchströmtes Wärmetauscherrohr.

Der Luftwärmetauscher ist gekennzeichnet durch mindestens ein Doppelrohrelement mit einem in Reihe durchströmten Innenrohr und einem zu diesem konzentrischen Außenrohr, wobei das Innenrohr mit mehreren Durchbrechungen in seinem Mantel für eine Direktströmung in den umgebenden Ringraum versehen ist. Damit gelangt kühle Verbrennungsluft aus dem Innenkanal in den umgebenden Ringraum, um sich dort mit bereits vorgewärmter Luft zu mischen und diese abzukühlen. Dabei umfassen Durchbrechungen beispielsweise Bohrungen oder Schlitze.

Erfindungsgemäß weist ein Doppelrohrelement an der Stirnseite des freien Endes eine Umlenkzone als Verbindung zwischen Innenrohr und einem zwischen Innenrohr und Au-βenrohr gebildeten Ringraum auf. Jedes Doppelrohrelement ist mit der Eintrittsseite des Innenrohres mit dem Verbrennungsluftkanal verbunden, so dass mindestens der Hauptstrom der Verbrennungsluft jeweils nach Verlassen des Innenrohres in einer Umlenkzone an der Stirnseite des freien Endes in den zwischen Innenrohr und Außenrohr gebildeten Ringraum gelangt, in Richtung verbrennungsluftkanalnaher Stirnseite zurück strömt und dort als vorgewärmte Verbrennungsluft im Bereich um eine Öleinspritzvorrichtung in eine Verteilkammer eintritt. Dazu überragt in einem Doppelrohrelement am öleinspritzvorrichtungsnahen Ende das Innenrohr das Außenrohr in Längsrichtung, so dass es den mit der Verteilkammer in Verbindung stehenden Ausmündungsbereich des Ringsraumes durchgreift und durch eine Begrenzungswand bis in den Verbrennungsluftkanal hinein reicht.

Vorzugsweise sind die Durchbrechungen für eine Direktströmung in den umgebenden Ringraum jeweils im Querschnitt mindestens um das Zehnfache kleiner als der Innendurchmesser des Innenrohres.

In einer ersten Ausführungsform sind die Durchbrechungen für eine Direktströmung in den umgebenden Ringraum im Wesentlichen im eintrittsseitigen Endbereich des Innenrohres angeordnet. Dort befindet sich im Innenrohr die kühle, eintretende Verbrennungsluft und im Ringraum liegt die höchste Temperatur am Ende des Wärme beaufschlagten Strömungsweges vor, so dass dort auch die Temperaturbelastung für das Material am größten ist und der Kühleffekt besonders wirkt.

Alternativ dazu sind in einer zweiten Ausführungsform die Durchbrechungen für eine Direktströmung in den umgebenden Ringraum im Wesentlichen gleichmäßig über den Mantel des Innenrohres verteilt.

Dagegen sind in einer dritten Ausführungsform die Durchbrechungen für eine Direktströmung in den umgebenden Ringraum im Wesentlichen auf dem zu einer zugeordneten Brenneroberfläche gerichteten Mantelbereich des Innenrohres angeordnet. Damit soll gezielt die kühlere Luft in die am stärksten mit Wärme beaufschlagten äußeren Wandbereiche gebracht werden.

Vorteilhaft ist auch eine Dosierung der überströmenden Luft-Teilmenge über die Länge und/oder den Umfang des Luftwärmetauscher, nämlich durch variierende Querschnitte, die Verteilung und/oder die Anzahl der Durchbrechungen für eine Direktströmung in den umgebenden Ringraum. Damit wird vorzugsweise ein größerer Gesamt-Durchtrittsquerschnitt im Bereich mit der höchsten Lufttemperatur im Ringraum, insbesondere im eintrittsseitigen Endbereich des Innenrohres, ausgebildet.

Weiterhin besitzen Innenrohr und/oder Außenrohr Turbulenz erzeugende Oberflächen, eine Profilierung und/oder Oberflächen vergrößernde Elemente, um den Wärmeübergang zu verbessern und insbesondere die wandnahe Strömung aufzubrechen. So kann das Au-βenrohr an seiner Innenseite eine dem Innenrohr zugeordnete Kontur aufweisen, welche im Wesentlichen aus radial umlaufenden oder sich längs erstreckenden, einen zahnartigen Querschnitt ausbildenden Sicken besteht.

In einer weiteren vorteilhaften Ausführungsform der Erfindung besitzt das Außenrohr Durchbrechungen im Mantel für den Austritt eines Verbrennungsluft-Teilstromes zur Durchführung einer Filmkühlung an der Oberfläche. Dabei ist der über die Durchbrechungen im Mantel des Außenrohres austretende Verbrennungsluft-Teilstrom vorzugsweise mindestens um das Zehnfache geringer als der Hauptstrom durch den Ringraum zwischen Innen- und Außenrohr. Vorzugsweise sind die Durchbrechungen im Mantel von Innenrohr und/oder Außenrohr radial nach außen gerichtet oder schräg in Strömungsrichtung angestellt sind.

Positioniert ist der Luftwärmetauscher oberhalb der Brenneroberfläche. Er besteht aus mehreren symmetrisch über den Umfang verteilten, sich achsparallel zum Brennelement, mindestens über einen Teil dessen Länge erstreckenden und parallel durchströmten Doppelrohrelementen.

Vorzugsweise sind die Durchmesser von Innenrohr und Außenrohr so bemessen, dass der freie Querschnitt im Verlauf des Strömungsweges der Verbrennungsluft mindestens gleich bleibt oder zunimmt. Damit wird eine Anpassung an das mit der Lufttemperatur steigende Volumen erreicht. Andererseits ist über die Querschnittsgestaltung im Ringraum auch die Strömungsgeschwindigkeit, und somit die Wärmeaufnahmefähigkeit bzw. auch die Wärmebelastung der Außenoberfläche, in den jeweiligen Kanalbereichen gezielt beeinflussbar.

Vorteilhafterweise sind Innenrohr und Außenrohr mindestens punktuell aneinander abgestützt. Dabei erfolgt dies insbesondere in der Umlenkzone an der Stirnseite des freien Endes und/oder durch Einbauteile und/oder eine spezielle Ausbildung der Rohrwand, indem diese beispielsweise mit stegartigen Vorsprüngen, Ausstellungen, kleinen Abkantungen im Endbereich oder lokalen Prägungen versehen ist.

Mit den erfindungsgemäßen Maßnahmen wird ein Luftwärmetauscher für einen Ölvormischbrenner optimiert. Es verbessern sich sowohl die Verbrennungsqualität als auch die Robustheit, weil die Temperaturbelastung des Rohr-Werkstoffes verringert wird. Auch wenn auf das Außenrohr punktuell hohe Temperaturen aus dem Flammenbereich von au-βen her wirken, kann dies beispielsweise durch eine entsprechend gezielte Spülung der Innenwand mit kühlerer Luft, welche aus dem Innenrohr über die Durchbrechungen austritt, abgefangen werden. Indem der Luftstrahl auf die zugeordnete Innenseite des Außerohres trifft, wird die sogenannte Prallkühlung realisiert. Nicht nur aus dem Wandbereich wird dabei Wärme aufgenommen, sondern es entstehen dabei Verwirbelungen, welche auch den Wärmeübergang im Ringraum begünstigen.

Insbesondere für modulierenden Betrieb ist die erfindungsgemäße Anordnung mit dem integrierten Luftwärmetauscher vorteilhaft. So betrifft dies prinzipiell Brenner mit einem zylindrischen Brennelement genauso wie Flächenbrenner mit einer horizontalen Brenneroberfläche und dem erfindungsgemäßem Aufbau. Die Flamme brennt dabei an bzw. in der Brenneroberfläche, so dass oberhalb davon Energie aus der Flamme ausgekoppelt und zur Erwärmung der Verbrennungsluft genutzt wird. Damit entfällt eine elektrische Luftvorwärmung während des stationären Brenner-Betriebszustandes. Dies wirkt sich positiv auf die Energiebilanz des Brenners aus.

Ein bedeutender Vorteil der erfindungsgemäß integrierten Luftvorwärmungsfunktion ist, dass mit zunehmender Brenneroberfläche, beispielsweise bei einem Brennelement für größere Leistungsbereiche, auch die Wärmetauscheroberfläche in gleichem Maße erweiterbar ist, indem einfach längere Doppelrohrelemente zum Einsatz kommen. Damit bleibt die angestrebte Lufttemperatur konstant. Jedes Rohr wird durch seine spezifische Leistungsdichte und die Rohr-Anzahl in Abhängigkeit von der Gesamtleistung definiert. Nur an den Doppelrohrelementen des Luftwärmetauschers, aber nirgendwo an sonstigen Komponenten oder an der Peripherie, sind daher konstruktive Änderungen für die Darstellung unterschiedlicher Brenner-Leistungsgrößen nötig. Der sonstige Brenneraufbau bleibt somit genauso erhalten wie beispielsweise geometrische und/oder strömungstechnische Anforderungen an den umgebenden Feuerraum.

Mit dem erfindungsgemäßen Luftwärmetauscher soll Verbrennungsluft in allen Brenner-Betriebspunkten mit einer Mindesttemperatur von ca. 350 °C bereitgestellt werden. Dabei ist zu beachten, dass unter Einhaltung die maximal zulässigen Oberflächentemperatur am Luftwärmetauscher die Länge von Rohrelementen herkömmlicher Bauart, d. h. in Form von glatten, U-förmigen Wärmetauscher-Bögen, sowie die Anzahl der Rohre nicht beliebig gesteigert werden kann. Neben den Grenzen in der Einhaltung des maximalen Biegeradius steigen mit längeren herkömmlichen Rohren ansonsten auch die Materialtemperaturen weiter an und bringen eine Gefahr des Durchbiegens mit sich.

Im Gegensatz dazu ist erfindungsgemäß aber eine Längenausdehnung aufgrund thermischer Belastung möglich, da jedes Doppelrohrelement des Luftwärmetauschers nur einseitig eingespannt ist. Größere, einem Brennelement entsprechend angepasste Längen bzw. Auskragungen von Doppelrohrelementen lassen sich durch gegenseitige Abstützung von Innen- und Außenrohr realisieren.

Mit der Erfindung wird der Einsatz profilierter Rohre, welche den Wärmeübergang begünstigen und für eine geringe, Material schonende Oberflächentemperatur sorgen, erst möglich. Besonders das Innenrohr kann als Turbulenzanreger bzw. Strömungsbrecher fungieren. Generell lässt sich mit den erfindungsgemäßen Doppelrohrelementen eine gegenüber dem Stand der Technik höhere Packungsdichte auf einem Teilkreis im Bereich der Brenneroberfläche erzielen. Außerdem besitzen diese Vorteile in Bezug auf Druckverlust und Skalierbarkeit. Vom Prinzip her wird erfindungsgemäß mit einem Doppelrohrelement ein Gegenstromwärmetauscher realisiert, denn die Luftströmung in den beiden Kanälen läuft entgegengesetzt.

Die Zeichnung stellt ein Ausführungsbeispiel der Erfindung dar. Es zeigt:

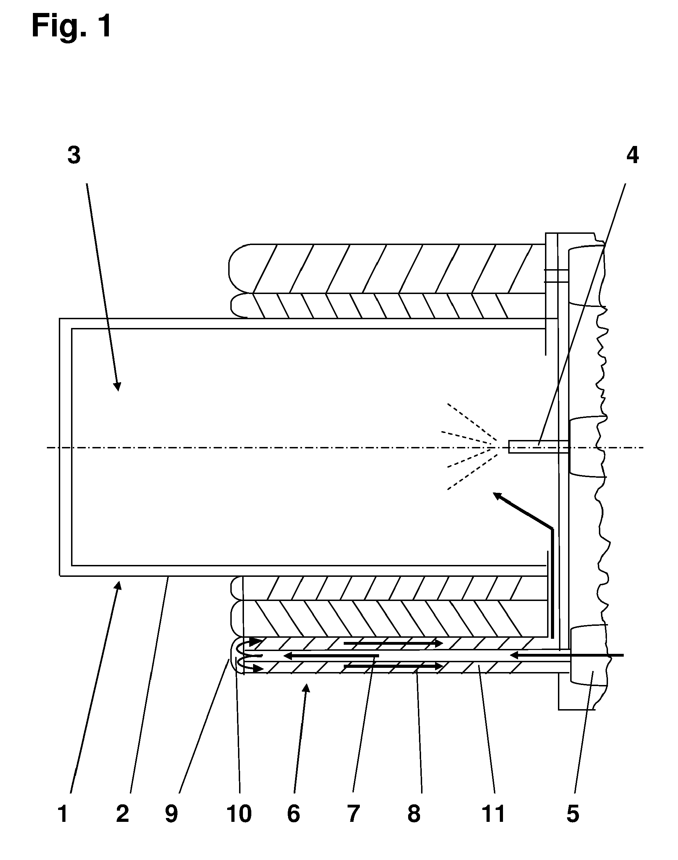

- Fig. 1:: einen Ölvormischbrenner im Längsschnitt,

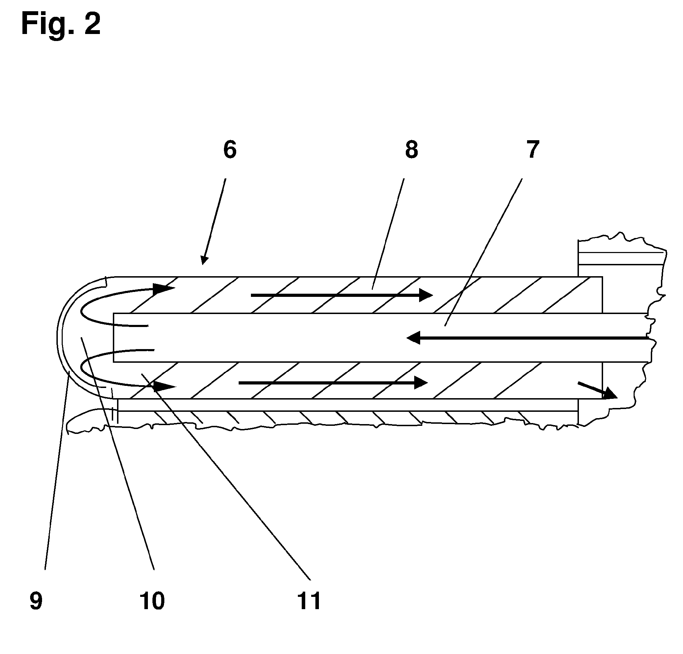

- Fig. 2:: einen Längsschnitt durch ein Doppelrohrelement als Teil eines Luftwärmetauschers,
- Fig. 3:: einen Querschnitt und perspektivische Ansichten eines Doppelrohrelementes mit Durchbrechungen im Innenrohr,
- Fig. 4:: einen Längsschnitt durch ein Doppelrohrelement ohne und mit Innenrohr und
- Fig. 5:: einen Längsschnitt durch ein Doppelrohrelement mit Durchbrechungen im Innenund Außenrohr.

Der Ölvormischbrenner besteht im Wesentlichen aus einem zylindrischen Brennelement 1, mit einer Brenneroberfläche 2 auf der äußeren Mantelfläche, einer Verteilkammer 3 unterhalb der Brenneroberfläche 2, einer zentralen Öleinspritzvorrichtung 4 und einem an ein stromaufwärts angeordnetes Gebläse angeschlossenen Verbrennungsluftkanal 5.

Das Brennelement 1 besitzt zur Vorwärmung der Verbrennungsluft im Bereich oberhalb der Brenneroberfläche 2 einen Luftwärmetauscher, welcher aus mehreren, symmetrisch über den Umfang verteilten, parallel durchströmten Doppelrohrelementen 6 mit einem in Reihe durchströmten Innenrohr 7 und einem zu diesem konzentrischen Außenrohr 8 besteht.

Jedes Doppelrohrelement 6 ist an der Stirnseite des freien Endes mit einer Kappe 9 verschlossen, so dass es eine strömungsgünstige Umlenkzone 10 als Verbindung zwischen Innenrohr 7 und einem zwischen diesem und dem Außenrohr 8 gebildeten Ringraum 11 aufweist. Aus dem Verbrennungsluftkanal 5 gelangt Verbrennungsluft in das Innenrohr 7 jedes Doppelrohrelementes 6 und über die Umlenkzone 10 in den Ringraum 11. Darin strömt sie in Richtung Öleinspritzvorrichtung 4 zurück und tritt in die Verteilkammer 3 ein.

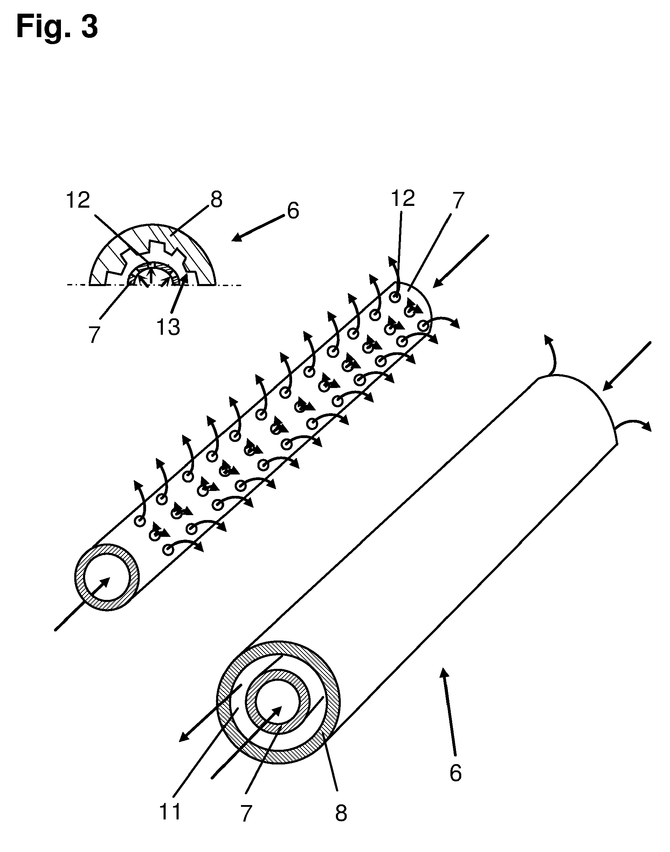

Wie in Fig. 3, Fig. 4 und Fig. 5 dargestellt, ist das Innenrohr 7 mit mehreren Durchbrechungen 12 in seinem Mantel versehen, um eine Direktströmung in den umgebenden Ringraum 11 zu bewirken. Die Figuren zeigen weiterhin eine gleichmäßige Verteilung der Durchbrechungen 12 für eine Direktströmung in den umgebenden Ringraum 11 über den Mantel des Innenrohres 7. Durch variierende Querschnitte, die Verteilung und/oder die Anzahl der Durchbrechungen 12 kann ein größerer Gesamt-Durchtrittsquerschnitt im Bereich mit der höchsten Lufttemperatur im Ringraum 11, welche üblicherweise auf der Austrittsseite aus dem Ringraum 11 auftreten wird, ausgebildet werden.

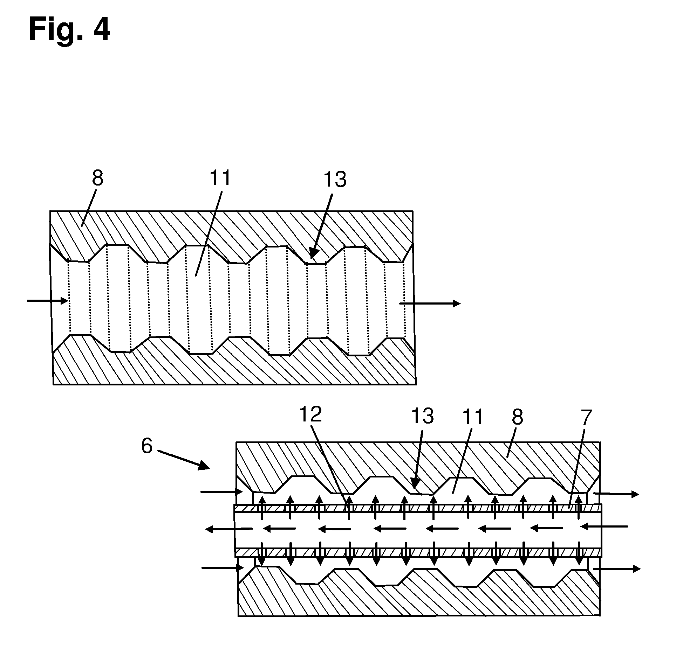

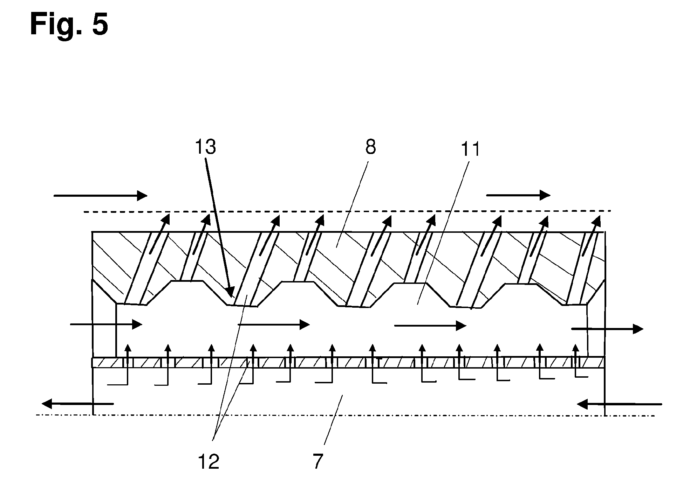

Gemäß Fig. 3 besitzt das Außenrohr 8 an seiner Innenseite eine dem Innenrohr 7 zugeordnete Kontur aus sich längs erstreckenden, einen zahnartigen Querschnitt ausbildenden Sicken 13. Gemäß Fig. 4 und Fig. 5 können diese Sicken 13 auch radial umlaufend gestaltet sein.

Speziell Fig. 5 zeigt ein Außenrohr 8 mit Durchbrechungen 12 im Mantel. Darüber tritt ein Teil der Verbrennungsluft aus, um eine Filmkühlung an der Oberfläche des Außenrohres 8 zu realisieren. Heiße Verbrennungsabgase von der Brenneroberfläche 2 werden dadurch aus dem direkten, oberflächennahen Bereich des Außenrohres 8 ferngehalten, aber die Strahlungswärme wirkt trotz dem vollständig auf den Luftwärmetauscher 6. Damit wird das Material des Luftwärmetauschers 6, beispielsweise ein Edelstahl-Werkstoff, geschont. Auch zeigt Fig. 5 radial nach außen gerichtete und schräg in Strömungsrichtung angestellte Durchbrechungen 12 im Mantel des Außenrohres 8. Die schräge Anstellung führt zu einer besseren Anströmung auf der Eintrittsseite einer Durchbrechung 12.

## Patentansprüche

1. Luftwärmetauscher, insbesondere zur Vorwärmung von Verbrennungsluft bei einem Ölvormischbrenner durch Wärmeübertragung im Bereich einer Brenneroberfläche (2) von einem Brennelement (1), umfassend ein außen mit Wärme beaufschlagtes und innen mit Luft aus einem stromaufwärtigen, mit einem Gebläse verbundenen Verbrennungsluftkanal (5) durchströmtes Wärmetauscherrohr,
**gekennzeichnet durch** mindestens ein Doppelrohrelement (6) mit einem in Reihe durchströmten Innenrohr (7) und einem zu diesem konzentrischen Außenrohr (8), wobei das Innenrohr (7) mit mehreren Durchbrechungen (12) in seinem Mantel für eine Direktströmung in den umgebenden Ringraum (11) versehen ist.

2. Luftwärmetauscher nach Anspruch 1,
**dadurch gekennzeichnet, dass** ein Doppelrohrelement (6) an der Stirnseite des freien Endes eine Umlenkzone (10) als Verbindung zwischen Innenrohr (7) und einem zwischen Innenrohr (7) und Außenrohr (8) gebildeten Ringraum (11) aufweist.

3. Luftwärmetauscher nach den Ansprüchen 1 oder 2,
**dadurch gekennzeichnet, dass** jedes Doppelrohrelement (6) mit der Eintrittsseite des Innenrohres (7) mit dem Verbrennungsluftkanal (5) verbunden ist, dass mindestens der Hauptstrom der Verbrennungsluft jeweils nach Verlassen des Innenrohres (7) in einer Umlenkzone (10) an der Stirnseite des freien Endes in den zwischen Innenrohr (7) und Außenrohr (8) gebildeten Ringraum (11) gelangt, in Richtung verbrennungsluftkanalnaher Stirnseite zurück strömt und dort als vorgewärmte Verbrennungsluft im Bereich um eine Öleinspritzvorrichtung (4) in eine Verteilkammer (3) eintritt.

4. Luftwärmetauscher nach einem der Ansprüche 1 bis 3,
**dadurch gekennzeichnet, dass** die Durchbrechungen (12) für eine Direktströmung in den umgebenden Ringraum (11) jeweils im Querschnitt mindestens um das Zehnfache kleiner als der Innendurchmesser des Innenrohres (7) sind.

5. Luftwärmetauscher nach einem der Ansprüche 1 bis 4,
**dadurch gekennzeichnet, dass** die Durchbrechungen (12) für eine Direktströmung in den umgebenden Ringraum (11) im Wesentlichen im eintrittsseitigen Endbereich des Innenrohres (7) angeordnet sind.

6. Luftwärmetauscher nach einem der Ansprüche 1 bis 4,
**dadurch gekennzeichnet, dass** die Durchbrechungen (12) für eine Direktströmung in den umgebenden Ringraum (11) im Wesentlichen gleichmäßig über den Mantel des Innenrohres (7) verteilt sind.

7. Luftwärmetauscher nach einem der Ansprüche 1 bis 6,
**dadurch gekennzeichnet, dass** die Durchbrechungen (12) für eine Direktströmung in den umgebenden Ringraum (11) im Wesentlichen auf dem zu einer zugeordneten Brenneroberfläche (2) gerichteten Mantelbereich des Innenrohres (7) angeordnet sind.

8. Luftwärmetauscher nach einem der Ansprüche 1 bis 7,
**dadurch gekennzeichnet, dass** durch variierende Querschnitte, die Verteilung und/oder die Anzahl der Durchbrechungen (12) für eine Direktströmung in den umgebenden Ringraum (11) ein größerer Gesamt-Durchtrittsquerschnitt im Bereich mit der höchsten Lufttemperatur im Ringraum (11), vorzugsweise im eintrittsseitigen Endbereich des Innenrohres (7), ausgebildet ist.

9. Luftwärmetauscher nach einem der Ansprüche 1 bis 8,
**dadurch gekennzeichnet, dass** das Innenrohr (7) und/oder das Außenrohr (8) Turbulenz erzeugende Oberflächen, eine Profilierung und/oder Oberflächen vergrößernde Elemente aufweisen.

10. Luftwärmetauscher nach einem der Ansprüche 1 bis 9,
**dadurch gekennzeichnet, dass** das Außenrohr (8) an seiner Innenseite eine dem Innenrohr (7) zugeordnete Kontur aufweist, welche im Wesentlichen aus radial umlaufenden oder sich längs erstreckenden, einen zahnartigen Querschnitt ausbildenden Sicken (13) besteht.

11. Luftwärmetauscher nach einem der Ansprüche 1 bis 10,
**dadurch gekennzeichnet, dass** das Außenrohr (8) Durchbrechungen (12) im Mantel für den Austritt eines Verbrennungsluft-Teilstromes zur Durchführung einer Filmkühlung an der Oberfläche aufweist.

12. Luftwärmetauscher nach einem der Ansprüche 1 bis 11,
**dadurch gekennzeichnet, dass** der durch Durchbrechungen (12) Im Mantel des Au-βenrohres (8) austretende Verbrennungsluft-Teilstrom mindestens um das Zehnfache geringer ist als der Hauptstrom durch den Ringraum (11) zwischen Innenrohr (7) und Außenrohr (8).

13. Luftwärmetauscher nach einem der Ansprüche 1 bis 12,
**dadurch gekennzeichnet, dass** die Durchbrechungen (12) im Mantel von Innenrohr (7) und/oder Außenrohr (8) radial nach außen gerichtet oder schräg in Strömungsrichtung angestellt sind.

14. Luftwärmetauscher nach einem der Ansprüche 1 bis 13,
**dadurch gekennzeichnet, dass** der Luftwärmetauscher oberhalb der Brenneroberfläche (2) angeordnet ist und aus mehreren symmetrisch über den Umfang verteilten, sich achsparallel zum Brennelement (1), mindestens über einen Teil dessen Länge erstreckenden und parallel durchströmten Doppelrohrelementen (6) besteht.
